# EUROPÄISCHE PATENTANMELDUNG

(11) **EP 3 236 395 A1**
(43) Veröffentlichungstag der Anmeldung: **25.10.2017**
(21) Anmeldenummer: 17000689.4
(22) Anmeldetag: 21.04.2017
(51) Int. Cl.: G06K 19/077

(54) **CHIPKARTE MIT LICHTQUELLE**

(30) Priorität: 22.04.2016 DE 102016004900
(71) Anmelder: Giesecke+Devrient Mobile Security GmbH, 81677 München (DE)
(72) Erfinder: Kluge, Stefan, 80997 München (DE)

(57) **Zusammenfassung**

Die vorliegend Erfindung betrifft einen kartenförmigen Datenträger mit einem Kartenkörper in den mehrere Streukörper eingebracht sind, wobei der Kartenkörper eine Punktlichtquelle zur Bestrahlung mindestens einer Auswahl der mehreren Streukörper aufweist. Erfindungsgemäß erzeugt die Punktlichtquelle mittels Bestrahlung der Streukörper ein besonders intensives Lichtmuster.

## Beschreibung

Die vorliegende Erfindung betrifft einen kartenförmigen Datenträger mit einem Kartenkörper in den mehrere Streukörper eingebracht sind, wobei der Kartenkörper ferner eine punktuelle Lichtquelle aufweist. Die vorliegende Erfindung ist ferner gerichtet auf ein entsprechendes Verfahren zum Bereitstellen des kartenförmigen Datenträgers.

Chipkarten werden in vielen Bereichen eingesetzt, beispielsweise als Ausweisdokumente, zum Nachweis einer Zugangsberechtigung zu einem Mobilfunknetz oder zur Durchführung von Transaktionen des bargeldlosen Zahlungsverkehrs. Eine Chipkarte weist einen Kartenkörper und einen in den Kartenkörper eingebetteten integrierten Schaltkreis auf. Die eigentliche Funktionalität der Chipkarte wird vom integrierten Schaltkreis bereitgestellt. Hierzu sind im integrierten Schaltkreis beispielsweise Daten gespeichert und Anwendungen implementiert. Der Kartenkörper dient der Handhabung der Chipkarte und kann als Träger von visuellen Informationen und von Sicherheitsmerkmalen dienen. Dabei wird in der Regel versucht, der Chipkarte über eine geeignete Gestaltung des Kartenkörpers ein attraktives Aussehen zu verleihen.

Aus der DE 101 53 260 A1 ist eine Datenträgerkarte mit einem plattenförmigen Kartenkörper aus einem durchsichtigen Kunststoffmaterial bekannt, dem fluoreszierende Farbstoffe beigegeben sind. Bei einer Bestrahlung mit Licht auf den Flachseiten der Datenträgerkarte leuchtet diese beispielsweise an ihren Kantenflächen in der Farbe des beigemischten fluoreszierenden Farbstoffs. Dieser Leuchteffekt kann bei Sicherheitsüberprüfungen einer derartigen Karte genutzt werden.

Aus der DE 100 48 812 A1 ist ein Verfahren zur Personalisierung von lumineszierenden Echtheitsmerkmalen auf Datenträgern bekannt. Bei diesem Verfahren wird ein lumineszierendes Echtheitsmerkmal in den Kartenverbünd eingebracht oder auf den Kartenverbund aufgebracht.

Die EP 1919 714 B1 zeigt eine Chipkarte mit einem Kartenkörper, auf dem ein graphisches Element dargestellt ist, wobei der Kartenkörper ein Kuriststoffmaterial zur Umwandlung von eingestrahltem Licht in Sekundärlicht und zur Weiterleitung des Sekundärlichts innerhalb des Kartenstoffmaterials zum graphischen Element aufweist.

Bekannt sind zudem opake Streukörper, z.B. Lithopone, Titandioxid, Zinkweiß und dergleichen, welche in transparenten Kunststoffen als Diffusoren verwendet werden. Anwendungen für solche Anordnungen sind z.B. Einstrahlungen von Licht bzw. LED-Beleuchtung von Kunststoffflächen innerhalb des Kartenkörpers. Dies kann zur Implementierung eines Sicherheitsmerkmals Verwendung finden oder aber auch einfach ein optisch ansprechendes Design der Chipkarte bewirken.

Ferner kann ein Metalliceffekt erzeugt werden, der durch die Verwendung spezieller plättchenförmiger Pigmente, welche z.B. in der Lackformulierung enthalten sind, entsteht. Dies kann beispielsweise mittels Einbringung von Partikeln, welche aus Aluminium, Messing oder Silber bestehen, durchgeführt werden. Diese Pigmente können in einem transparenten Bindemittel enthalten sein und können typischerweise aufgrund des hohen Füllgrades eine opake Schicht erzeugen, welche mit einer transparenten Deckschicht, z.B. einem Lack oder einer Folie, abgedeckt wird. Dabei können neben den metallischen Pigmenten, welche primär für die glitzernde Reflexion Verwendung finden, auch weitere Farbpigmente beigemengt werden, um einen beliebigen Farbton zu erzielen.

Gemäß dem Stand der Technik ist es lediglich möglich, Leuchtmuster mit geringer Leuchtkraft bzw. Intensität zu erzeugen. Dies ist der Fall, da Tageslicht, also natürliches Licht, ausgenommen direkte Sonneneinstrahlung, oder Kunstlicht meist lediglich eine diffuse Lichtquelle darstellt und nur diffuse Reflexe erzeugt, welche nicht in ausreichender Intensität wahrgenommen werden können. Zwar kennt der Stand der Technik eine aktive Beleuchtung aus dem Inneren des Kartenkörpers heraus, welche wiederum Teile des Kartenkörpers beleuchtet, jedoch ist diese Art der Beleuchtung diffus.

Es ist somit eine Aufgabe der vorliegenden Erfindung, eine Chipkarte bereitzustellen, welche es ermöglicht, ein derart deutlich erkennbares Leuchtmuster bereitzustellen, dass dies als ein Sicherheitsmerkmal der Chipkarte geeignet ist. Alternativ zu dem Sicherheitsmerkmal ist es vorteilhaft eine Chipkarte bereitzustellen, welche ein derart intensives Leuchtmuster bereitstellt, dass dieses für einen Betrachter optisch ansprechend ist.

Die Aufgabe wird gelöst durch das Bereitstellen eines Datenträgers mit einem Chipkartenkörper mit den Merkmalen des entsprechenden unabhängigen Patentanspruchs. In den davon abhängigen Ansprüchen sind vorteilhafte Ausgestaltungen und Weiterbildungen der Erfindung angegeben.

Demgemäß wird ein kartenförmiger Datenträger mit einem Kartenkörper, in den mehrere Streukörper eingebracht sind, bereitgestellt, wobei der Kartenkörper eine Punktlichtquelle zur Bestrahlung mindestens einer Auswahl der mehreren Streukörper aufweist.

Der erfindungsgemäße kartenförmige Datenträger liegt vorzugsweise als eine Chipkarte vor, wie sie der generellen Bauart nach bereits von Bankkarten oder Zugangskarten bekannt ist. Hierbei muss jedoch nicht zwangsläufig ein Chip verbaut werden, sondern in einfachen Aufbauten kann auch lediglich ein Magnetstreifen Verwendung finden. Der Datenträger besteht im Wesentlichen aus dem Kartenkörper in den erfindungsgemäß kleine Streukörper eingebracht sind. Die Streukörper können dabei unterschiedliche optische Eigenschaften haben. Eine erste Eigenschaft ist, dass die Streukörper einfallendes Licht wie ein Spiegel reflektieren und somit eine sogenannte gerichtete Streuung des einfallenden Lichts bewirken. Eine zweite Eigenschaft ist, dass die Streukörper das einfallende Licht ungerichtet reflektieren und somit eine sogenannte diffuse Streuung des einfallenden Lichts bewirken. Eine dritte Eigenschaft der Streukörper ist, dass das einfallende Licht wie bei einem optischen Prisma gebrochen wird, sodass das einfallende Licht in seine einzelnen Wellenlängen aufgespalten wird, wobei die einzelnen Wellenlängen jeweils unter einem eigenen Winkel zum Streukörper, der als optisches Prisma wirkt, für einen Betrachter ohne technische Hilfsmittel mit blanken Auge erkennbar sind.

Die Größe der Streukörper ist derart gewählt, dass eine Vielzahl von Streukörpern in den Kartenkörper eingebracht werden kann. Hierbei ist es besonders vorteilhaft, die Streukörper derart in den Kartenkörper einzubringen, dass ein vorbestimmtes oder ein willkürliches Muster mittels der Streukörper erzeugt wird. So können beispielsweise Streukörper in einer vorbestimmten Anordnung in den Kartenkörper eingebracht werden oder einfach in einer beliebigen Anordnung in den Kartenkörper eingebracht werden. Mittels einer solchen Anordnung ist es möglich, ein Sicherheitsmerkmal des Datenträgers zu implementieren. Beispielsweise kann der erfindungsgemäße Datenträger mittels des Streukörpermusters derart individualisiert werden, dass jeder erzeugte Datenträger ein einzigartiges Streukörpermuster aufweist, welches ihn von weiteren Datenträgern unterscheidet.

Ferner weist der Kartenkörper eine Punktlichtquelle, z.B. eine LED, zur Bestrahlung der Streukörper auf. Hierbei ist es vorteilhaft, dass die Streukörper in eine transparente Schicht eingebracht werden. Somit ist es möglich, die Punktlichtquelle derart bezüglich der transparenten Schicht anzuordnen, bzw. in diese einzubringen, dass der Lichtstrahl durch die transparente Schicht auf mindestens einen Streukörper trifft. Hierbei ist es möglich, dass die Streukörper zumindest teilweise derart transparent sind, dass der Lichtstrahl ausgehend von der Punktlichtquelle durch einen ersten Streukörper hindurch auf mindestens einen weiteren, zweiten Streukörper auftrifft.

Die Punktlichtquelle ist geeignet, mindestens einen Strahl zu erzeugen, welcher auf mindestens einen Streukörper innerhalb des Kartenkörpers auftrifft, sodass er von einem Betrachter mit blanken Auge zu erkennen ist. Jeder einzelne Streukörper ist von einem Betrachter erkennbar aufgrund der oben genannten optischen Eigenschaften, d.h. gerichtete Reflektion, ungerichtete oder diffuse Reflektion oder Brechung des einfallenden Lichts. Ferner können Streukörper erkannt werden aufgrund von Farbpigmenten, z.B. Fluoreszenzfarbstoffen.

Die Streukörper können auch als Glitzerkörper bezeichnet werden. Bei der Verwendung von solchen Streukörpern in Chipkarten, mit oder ohne aktiver Lichtquelle, können reflektierende Metall- oder Glimmerpartikel eingebracht werden. Diese können als Pigmente in Form von kleinen so genannten Flakes vorliegen und ein optisch ansprechendes Bild erzeugen, dadurch, dass die Flakes ein Aufleuchten mit einem so genannten "Glittereffekt" ergeben. Ein solcher "Glittereffekt" kann als eine punktuelle gerichtete Reflexion anstatt einer flächenmäßig gleichmäßig diffusen Streuung beschrieben werden. Erfindungsgemäß ist es besonders vorteilhaft, dass durch die Verwendung einer Punktlichtquelle innerhalb des Kartenkörpers in Verbindung mit den Streukörpern ein besonders ansprechendes Leuchtmuster anhand einzelner hell aufleuchtender Punkte entsteht. Dies hat den Vorteil, dass mittels der Punktlichtquelle das Vorhandensein eines Leuchtmusters geprüft werden kann, was mittels diffusen Lichts, z.B. Umgebungslicht, nicht möglich ist.

Gemäß einem Aspekt der vorliegenden Erfindung liegt die Punktlichtquelle als eine aktive Lichtquelle vor. Dies hat den Vorteil, dass die Streukörper mit einer besonders hohen Intensität angestrahlt werden können, was wiederum zu einem höheren Leuchtverhalten beiträgt. Zwar ist es auch möglich, eine passive Punktlichtquelle derart bereitzustellen, dass einfallendes Licht gezielt derart umgelenkt wird, dass eben eine Punktlichtquelle entsteht, dies resultiert jedoch in einem weitaus geringeren hellen Aufleuchten der Streukörper. Der Fachmann erkennt hierbei, dass für eine aktive Leuchtquelle weitere Komponenten, z.B. eine Energiequelle, vorgesehen werden. Eine entsprechende Energiequelle kann z.B. eine Batterie oder eine Energieversorgung über ein elektromagnetisches Feld eines Lesegeräts sein. Die Energiequelle dient dann der Versorgung der Punktlichtquelle mit elektrischer Energie. Ferner können Schaltelemente vorgesehen werden zum Ein- und Ausschalten der Punktlichtquelle.

Gemäß einem weiteren Aspekt der vorliegenden Erfindung liegt die Punktlichtquelle als eine LED vor. Dies hat den Vorteil, dass sich der erfindungsgemäße Kartenaufbau mit lediglich einfachem technischen Aufwand umsetzen lässt und LEDs bezüglich der benötigten elektrischen Energie relativ leuchtstark sind.

Gemäß einem weiteren Aspekt der vorliegenden Erfindung sind die Streukörper in ein transparentes Material des Kartenkörpers eingebracht. Dies hat den Vorteil, dass die Streukörper räumlich in einer Schicht angeordnet werden können, wobei die Schicht mittels der Punktlichtquelle durchstrahlbar ist derart, dass ein bestimmtes Leuchtmuster entsteht. Die Punktlichtquelle kann innerhalb und/ oder außerhalb des transparenten Materials angeordnet sein. Das von Punktlichtquelle abgestrahlte Licht schließt einen beliebigen Winkel mit dem transparenten Material ein. Ein transparentes Material kann hierbei als Trägermaterial bezeichnet werden, welches in dessen Transparenz und Farbigkeit variabel ist. Eine solche Variabilität kann durch die Wahl eines geeigneten Trägermaterials angepasst werden. Die Transparenz des Materials ist somit in Abhängigkeit des Anwendungsszenarios wählbar. Auch muss die Transparenz des Materials nicht homogen sein, so dass sich wiederum ein einzigartiges Leuchtmuster ergibt.

Gemäß einem weiteren Aspekt der vorliegenden Erfindung weisen die mehreren Streukörper einen anderen Brechungsindex als das die Streukörper umgebende transparente Material auf. Dies hat den Vorteil, dass das Leuchtverhalten anhand des Brechungsindex eingestellt werden kann. So ergibt sich in Abhängigkeit des Materials bzw. der Beschaffenheit sowohl der Streukörper als auch des die Streukörper umgebenden transparenten Materials ein bestimmtes Lichtmuster.

Gemäß einem weiteren Aspekt der vorliegenden Erfindung weist das transparente Material Fluoreszenzfarbstoffe auf. Dies hat den Vorteil, dass die eingebrachten Farbstoffe ebenfalls durch die Punktlichtquelle zu einem vorbestimmten oder diffusen Leuchtverhalten angeregt werden. Somit lassen sich ebenfalls in vorteilhafter Art und Weise Sicherheitsmerkmale realisieren. Gemäß einem weiteren Aspekt der vorliegenden Erfindung sind die mehreren Streukörper in eine Schicht des Kartenkörpers eingebracht. Dies hat den Vorteil, dass der kartenförmige Datenträger gemäß bekannter Verfahren hergestellt werden kann, wobei das Herstellungsverfahren lediglich derart angepasst werden muss, dass eine weitere Schicht mit den mehreren Streukörpern und der Punktlichtquelle eingebracht werden muss. Somit können herkömmliche Herstellungsverfahren im Wesentlichen wie gewohnt ablaufen und es muss lediglich eine weitere Schicht verbaut werden.

Gemäß einem weiteren Aspekt der vorliegenden Erfindung ist die eine Schicht durch mindestens eine Folie in einer vorbestimmten Ausrichtung innerhalb des Kartenkörpers bereitgestellt. Dies hat den Vorteil, dass mehrere Folien Verwendung finden können, in die die Streukörper eingebracht sind. Somit ist es möglich, die Streukörper direkt in mindestens eine der Folien einzubringen, z.B. mittels einer Zugabe der Zuschlagstoffe direkt im Extruder. Hierbei können ganzflächige Folien vorgesehen werden oder Streifenfolien mit einem oder mehreren Streifen, welche diese Streukörper aufweisen. Hierbei ist es auch möglich, die Streifen bzw. die Streifenfolie in einer beliebigen Orientierung in der Karte anzuordnen. Vorzugsweise wird die mindestens eine Folie mit den Streukörpern jedoch längs oder quer in der Karte angeordnet. Das heißt, dass die Folien bzw. die Streifenfolien entlang der Längskanten oder der Querkanten des Kartenkörpers angeordnet werden. Somit kann das Leuchtverhalten der Streukörper wiederum angepasst werden, da die verwendeten Folien mitsamt der Streukörper beliebig innerhalb der Karte angeordnet werden können.

Gemäß einem weiteren Aspekt der vorliegenden Erfindung liegen die Streukörper als Glasfaserschnitzel, Mikrofiber, gemahlene Glasfaser, Glashohlkugeln, Glasvollkugeln, Kunststoffhohlkugeln, Kunststoffvollkugeln, Glitzerkörper, Glimmerpartikel, Metallpartikel, metallisierte Partikel und/ oder Partikel mit dielektrischen Reflexschichten vor. Dies hat den Vorteil, dass die Streukörper in Abhängigkeit des Anwendungsszenarios ausgewählt werden können und die verwendeten Materialien bzw. geometrischen Formen wiederum spezifische Leuchtmuster hervorrufen. So ist es beispielsweise möglich, die Streukörper unter einander derart gemischt auszugestalten, dass beispielsweise sowohl Glasfaserschnitzel als auch Kugeln zur Bereitstellung der Streukörper Verwendung finden.

Gemäß einem weiteren Aspekt der vorliegenden Erfindung liegen die mehreren Streukörper gefärbt, transparent und/ oder fluoreszierend vor. Dies hat den Vorteil, dass die Streukörper z.B. einfarbig, transparent und gleichzeitig UV-fluoreszierend ausgestaltet werden können. Auf diese Art und Weise lassen sich wiederum mehrere Muster erzeugen.

Gemäß einem weiteren Aspekt der vorliegenden Erfindung weisen die mehreren Streukörper Nanopartikel, Gaseinschlüsse und oder Fluideinschlüsse auf. Dies hat den Vorteil, dass, falls die Streukörper, also das eingebrachte Material, als Hohlkugeln ausgestaltet sind, diese dabei auch gefüllt sein können wie es beispielsweise als E-Ink bekannt ist. Die Füllung kann dabei aus einem gegebenenfalls farbigen Fluid bestehen und elektrisch geladene oder magnetische Nanopartikel anderer Farben enthalten. Somit liegt ein von extern oder intern schaltbares Sicherheitsmerkmal vor. Gaseinschlüsse können beispielsweise Luft oder jedes andere beliebige Gas sein, um ein bestimmtes Leuchtverhalten hervorzurufen.

Gemäß einem weiteren Aspekt der vorliegenden Erfindung weisen die mehreren Streukörper einen Durchmesser von 1-20 µm, 15-100 µm oder 50-200 µm auf. Somit ist ein Kugeldurchmesser im Bereich von 1-200 µm möglich, was sich erfindungsgemäß besonders vorteilhaft auswirkt. So sorgt ein kleinerer Durchmesser für eine erhöhte Stabilität und ein größerer Durchmesser für einen geeigneten Effekt. Somit kann der Durchmesser der Streukörper in Abhängigkeit des Anwendungsszenarios geeignet gewählt werden. So sind beispielsweise kleinere Kugeln innerhalb der Chipkarte besonders druckbeständig und sorgen für eine lange Lebensdauer der Chipkarte. Besonders bei Hohlkugeln wird durch die eingeschlossene Luft ein starker optischer Effekt hervorgerufen, welcher noch durch die Wahl des Kugeldurchmessers angepasst werden kann.

Gemäß einem weiteren Aspekt der vorliegenden Erfindung sind die mehreren Streukörper derart in dem Kartenkörper angeordnet, dass diese von der Kartenrückseite und/ oder der Kartenvorderseite sichtbar sind. Dies hat den Vorteil, dass die Streukörper bzw. das Leuchtverhalten der Streukörper in einseitig oder beidseitig unbedruckten Bereichen der Kartenfläche sichtbar sind. Ferner ist es möglich, dass eine bedruckte Fläche durch das Leuchtmuster durchdrungen wird. Ist der Kartenkörper halb transparent ausgestaltet, so ist das resultierende Leuchtmuster auch durch die bedruckte Fläche erkennbar. Dies ist beispielsweise auch über ein von der Kartenrückseite oder der Kartenvorderseite bzw. Kartenkante an lateral versetzter Stelle eingekoppeltes Licht möglich. Ferner ist es möglich, einen Lichtleiter in der Karte zu implementieren, der das Licht weiterleitet. Somit entsteht ein spezifisches Leuchtmuster an mindestens einer Außenfläche des Kartenkörpers. Ferner können in der Chipkarte die Streukörper bei Betrachtung im Durchlicht oder bei Betrachtung im Auflicht sichtbar werden. Durch die Aktivierung einer im Kartenkörper vorhandenen Lichtquelle, z.B. einer LED oder durch im Kartenkörper vorhandenem Licht, welches z.B. durch transparente Schichten bzw. Bereiche gesammelt und weitergeleitet wird, kann ebenfalls das Leuchtverhalten der Streukörper oder direkt die Streukörper erkennbar sein. Der Lichtleiter kann flächig oder in Streifen ausgestaltet werden. Somit ist es ebenfalls möglich, die Punktlichtquelle passiv auszugestalten.

Ferner ist es möglich, den erfindungsgemäßen Datenträger unter Verwendung von Streifenfolien herzustellen. Hierbei kann eine einlagige Streifenfolie Verwendung finden oder aber auch mehrere Streifenfolien, welche gekreuzt werden. Unterschiedliche Streifenfolien können gekreuzt werden, wobei eine erste Streifenfolie mit Streukörpern vorgesehen wird und eine zweite Streifenfolie ohne Streukörper vorgesehen wird. Die Merkmale können zumindest halbtransparent sein und die Folie ohne Merkmale kann auch opak ausgestaltet werden. Hierbei ist eine beliebige Ausgestaltung von transparenten bzw. opaken Streifenfolien möglich. Ferner kann ein Betrachtungsfenster innerhalb der gekreuzten Bereiche der Streifenfolien vorgesehen sein. Ferner kann ein Betrachtungsfenster auf einem Kantenbereich des Kartenkörpers vorgesehen sein.

Erfindungsgemäß ist es somit möglich, mittels der Punktlichtquelle und den vorgesehenen Streukörpern ein Leuchtverhalten der Chipkarte zu erzeugen. Ein Leuchtverhalten kann hierbei ein bestimmtes Farbspiel, hervorgerufen durch Reflexion, Brechung und/ oder Streuung des von der Punktlichtquelle erzeugten Lichtstrahls an den Streukörpern, sein.

Die Aufgabe wird ferner gelöst durch ein Verfahren zum Bereitstellen eines kartenförmigen Datenträgers mit einem Kartenkörper, in den mehrere Streukörper eingebracht werden, wobei in den Kartenkörper eine Punktlichtquelle angeordnet wird, welche zur Bestrahlung mindestens einer Auswahl der mehreren Streukörper geeignet ist.

Gemäß einem weiteren Aspekt der vorliegenden Erfindung werden die mehreren Streukörper per Auftragsverfahren, wie z.B. Druckverfahren, insbesondere Siebdruckverfahren, Offsetdruckverfahren, Inkjetdruckverfahren, oder Slot-Die-Druckverfahren, auf mindestens eine Folie des Kartenkörpers aufgebracht, wobei die Folie mit den aufgebrachten Streukörpern an einer beliebigen Lage im Kartenkörper angeordnet sein kann. Der Fachmann erkennt hierbei weitere notwendige Verfahrensschritte. Handelt es sich bei der Punktlichtquelle um eine aktive Lichtquelle, so ist es beispielsweise notwendig eine Batterie und/ oder eine Antennenspule, welche mittels eines elektro-magnetischen Felds eines Lesegeräts mit Energie versorgt wird, zur Verfügung zu stellen.

Somit wird eine neuartige Chipkarte bzw. ein kartenförmiger Datenträger vorgeschlagen mitsamt einem entsprechenden Herstellungsverfahren. Der neuartige Datenträger ermöglicht es ein Sicherheitsmerkmal oder ein optisch ansprechendes Design der Chipkarte zu realisieren.

Weitere Merkmale und Vorteile der Erfindung ergeben sich aus der folgenden Beschreibung von erfindungsgemäßen Ausführungsbeispielen sowie weiteren Ausführungsalternativen in Zusammenhang mit der Zeichnung, die zeigt:

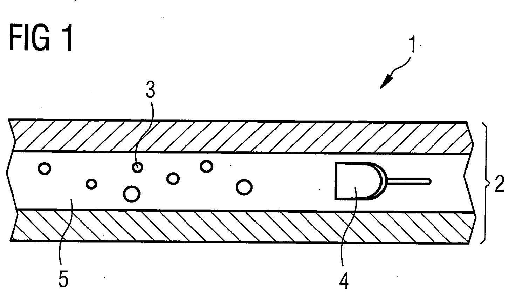

- Figur 1: Die erfindungsgemäße Chipkarte in einem schematischen Schichtenmodell.

Figur 1 zeigt den kartenförmigen Datenträger 1, welcher im Wesentlichen aus dem Kartenkörper 2 besteht. Dieser Kartenkörper 2 besteht wiederum aus mehreren Schichten, welche in dem vorliegenden Kartenquerschnitt horizontal angeordnet sind. So weist der Kartenkörper 2 eine Schicht auf, welche aus einem transparenten Trägermaterial 5 besteht, sowie darin eingebrachte Streukörper 3. Die eingebrachten Streukörper sind erfindungsgemäß wie in der Figur 1 gezeigt in einer einzigen Schicht eingebracht, können aber auch in mehreren Folien, welche vorliegend nicht gezeigt werden, eingebracht werden.

Ferner ist in der Schicht des Kartenkörpers 2, welche die Streukörper 3 aufweist, eine Punktlichtquelle 4 angeordnet. Diese erzeugt Licht, welches das transparente Material 5 im Wesentlichen durchdringt und auf die Streukörper 3 trifft. Hierbei ist es erfindungsgemäß besonders vorteilhaft, dass die Punktlichtquelle 4 besonders hell aufleuchtende Punkte auf der Kartenoberfläche erzeugt. So ist es erfindungsgemäß möglich, die obere Schicht, welche in der vorliegenden Figur 1 ganz oben angetragen ist, semitransparent auszugestalten, derart, dass die angestrahlten Streukörper 3 ein Leuchtmuster auf der Kartenoberfläche erzeugen. Diese Lichtpunkte auf der Kartenoberfläche sind im Vergleich zu einer diffusen Lichteinstrahlung besonders intensiv und somit besonders gut erkennbar.

In der vorliegenden Figur 1 sind die Streukörper 3 kugelartig ausgestaltet. Diese können jedoch auch andere Formen einnehmen und können beispielsweise in Form von Glasfaserschnitzeln oder gemahlenen Glasfasern vorliegen.

Generell ist es erfindungsgemäß möglich, die Streukörper untereinander verschieden auszugestalten. Somit können Streukörper aus unterschiedlichen Materialien, unterschiedlichem Durchmesser und unterschiedlichem Leuchtverhalten eingesetzt werden. Das Leuchtverhalten der Streukörper 3 ist gemäß der vorliegenden Erfindung ein passives Leuchtverhalten, da die eigentliche Beleuchtung von der Punktlichtquelle 4 ausgeht. Somit reflektieren bzw. streuen die Streukörper 3 das Licht der Punktlichtquelle 4.

Ferner ist es möglich, eine der Deckschichten des transparenten Materials 5, also in der vorliegenden Figur die oberste und/ oder die unterste Schicht, lichtundurchlässig, also opak, auszugestalten. Je nach Ausgestaltung der einzelnen Schichten kann somit das Lichtmuster der Streukörper 3 entweder von der Oberseite und/ oder der Unterseite der Chipkarte erkannt werden.

Die erfindungsgemäße Chipkarte weist eine besonders intensive Ausprägung des Sicherheitsmerkmals auf. Die Lichtstrahlen gehen im Wesentlichen von der Punktlichtquelle 4 aus und werden an den Streukörpern 3 zumindest teilweise gebrochen bzw. reflektiert. Somit ist die Punktlichtquelle 4 besonders geeignet ein spezielles Leuchtmuster zu erzeugen. Somit regt jeder der Lichtstrahlen, ausgehend von der Punktlichtquelle 4 eine Auswahl der eingebrachten Streukörper 3 zu einem passiven Leuchtverhalten an, wobei das resultierende Leuchtmuster an mindestens einer Kartenaußenseite erkennbar ist.

## Patentansprüche

1. Kartenförmiger Datenträger (1) mit einem Kartenkörper (2) in den mehrere Streukörper (3) eingebracht sind, **dadurch gekennzeichnet, dass** der Kartenkörper (2) eine Punktlichtquelle (4) zur Bestrahlung mindestens einer Auswahl der mehreren Streukörper (3) aufweist.

2. Datenträger (1) gemäß Anspruch 1, **dadurch gekennzeichnet, dass** die Punktlichtquelle (4) als eine aktive Lichtquelle (4) vorliegt.

3. Datenträger (1) gemäß Anspruch 1 oder 2, **dadurch gekennzeichnet, dass** die Punktlichtquelle (4) als eine LED vorliegt.

4. Datenträger (1) nach einem der vorhergehenden Ansprüche, **dadurch gekennzeichnet, dass** die Streukörper (3) in ein transparentes Material (5) des Kartenkörpers (2) eingebracht sind.

5. Datenträger (1) nach Anspruch 4, **dadurch gekennzeichnet, dass** die mehreren Streukörper (3) einen anderen Brechungsindex als das die Streukörper (3) umgebende transparente Material (5) des Kartenkörpers (2) aufweisen.

6. Datenträger (1) nach Anspruch 4 oder 5, **dadurch gekennzeichnet, dass** das transparente Material (5) Fluoreszenzfarbstoffe aufweist.

7. Datenträger (1) nach einem der vorhergehenden Ansprüche, **dadurch gekennzeichnet, dass** die mehreren Streukörper (3) in eine Schicht des Kartenkörpers (2) eingebracht sind.

8. Datenträger (1) nach Anspruch 7, **dadurch gekennzeichnet, dass** die eine Schicht durch mindestens eine Folie in einer vorbestimmten Ausrichtung innerhalb des Kartenkörpers (2) bereitgestellt ist.

9. Datenträger (1) nach einem der vorhergehenden Ansprüche, **dadurch gekennzeichnet, dass** die mehreren Streukörper (3) als Glasfaserschnitzel, Microfiber, gemahlene Glasfaser, Glashohlkugeln, Glasvollkugeln, Kunststoffhohlkugeln, Kunststoffvollkugeln, Glitzerkörper, Glimmerpartikel, Metallpartikel, metallisierte Partikel und/oder Partikel mit dielektrischen Reflexschichten vorliegen.

10. Datenträger (1) nach einem der vorhergehenden Ansprüche, **dadurch gekennzeichnet, dass** die mehreren Streukörper (3) gefärbt, transparent und/ oder fluoreszierend vorliegen.

11. Datenträger (1) nach einem der vorhergehenden Ansprüche, **dadurch gekennzeichnet, dass** die mehreren Streukörper (3) Nanopartikel, Gaseinschlüsse und/ oder Fluideinschlüsse aufweisen.

12. Datenträger (1) nach einem der vorhergehenden Ansprüche, **dadurch gekennzeichnet, dass** die mehreren Streukörper (3) einen Durchmesser von 1-20 µm, 15-100 µm oder 50-200 µm aufweisen.

13. Datenträger (1) nach einem der vorhergehenden Ansprüche, **dadurch gekennzeichnet, dass** die mehreren Streukörper (3) derart in dem Kartenkörper (2) angeordnet sind, dass diese von der Kartenrückseite und/ oder der Kartenvorderseite sichtbar sind.

14. Verfahren zum Bereitstellen eines kartenförmigen Datenträgers (1) mit einem Kartenkörper (2) in den mehrere Streukörper (3) eingebracht werden, **dadurch gekennzeichnet, dass** in den Kartenkörper (2) eine Punktlichtquelle (4) zur Bestrahlung mindestens einer Auswahl der mehreren Streukörper (3) eingebracht wird.

15. Verfahren nach Anspruch 14, **dadurch gekennzeichnet, dass** die mehreren Streukörper (3) per Auftragsverfahren auf mindestens eine Folie des Kartenkörpers (2) aufgebracht werden.
